# FASCICULE DE BREVET EUROPEEN

(11) **EP 0 507 905 B1**
(45) Date de publication et mention de la délivrance du brevet: **28.02.2007**
(21) Numéro de dépôt: 91917946.5
(22) Date de dépôt: 30.10.1991
(51) Int. Cl.: B65D 81/34, A47J 31/40

(54) **APPAREIL ET CARTOUCHE POUR LA PREPARATION D'UN PRODUIT LIQUIDE**
VORRICHTUNG UND KARTUSCHE ZUM BEREITEN EINES FLÜSSIGEN PRODUKTS
APPARATUS AND POUCH FOR PREPARING A LIQUID PRODUCT

(30) Priorité: 31.10.1990 CH 345990; 10.04.1991 CH 105891
(43) Date de publication de la demande: 14.10.1992
(73) Titulaire: Monodor S.A., 1041 St. Barthélemy (CH)
(72) Inventeur: FAVRE, Eric, CH-1041 St. Barthélémy (CH)
(74) Mandataire: Reuteler, Raymond Werner
(86) Numéro de dépôt international: PCT/CH1991/000222
(87) Numéro de publication internationale: WO 1992/007775

(56) Documents cités:
- EP-A- 0 199 953
- EP-A- 0 211 511
- EP-A- 0 468 078
- FR-A- 1 198 879
- FR-A- 2 373 999
- FR-A- 2 556 323
- US-A- 3 470 812
- US-A- 3 607 297

## Description

L'invention concerne un appareil et une cartouche pour la préparation d'un produit liquide par introduction sous pression d'un liquide et/ou d'une vapeur dans la cartouche, celle-ci contenant une dose d'au moins une substance apte à former ledit produit au moyen dudit liquide et/ou de la vapeur, l'appareil comportant des moyens d'alimentation de la cartouche en liquide et/ou vapeur, ainsi que des moyens pour recueillir le produit liquide à l'extérieur de la cartouche, la cartouche comportant une enveloppe étanche formant une paroi latérale, ainsi que deux parois opposées, dont l'une constitue la paroi de fond de la cartouche et l'autre ferme l'extrémité opposée de la cartouche. Un tel appareil est connu du US-A-3 470 812.

Un appareil avec cartouche et un procédé de préparation d'un produit liquide sont également décrits dans les brevets FR-A-2 373 999 et US-A-3 607 297 et dans la demande de brevet EP-A-0 468 078, qui fait partie de l'état de la technique selon l'Article 54 (3) CBE.

On connait déjà des cartouches de ce genre qui présentent notamment l'avantage de permettre de conserver la substance de départ à l'abri de l'atmosphère, éventuellement sous vide, et par conséquent de maintenir son état de fraîcheur pendant une période prolongée, tels que décrit dans US 3,607,297.

L'invention a, notamment, pour but de fournir un appareil et une cartouche du genre indiqué ci-dessus, agencée de manière telle qu'elle se prête à être fabriquée industriellement avec un faible prix de revient, tout en assurant une conservation parfaite de la substance qu'elle contient ainsi que des conditions optimales de préparation du produit liquidé, en particulier en ce qui concerne la durée de contact de la substance pulvérulente avec le liquide fourni par l'appareil.

A cet effet, la cartouche selon l'invention est caractérisée par les caractéristiques définis dans la partie caractérisante de la revendication indépendante. La pièce collectrice comporte au moins un logement délimité entre une ouverture pour l'introduction de la cartouche et une paroi traversée d'au moins un orifice pour le passage du produit liquide et munie de moyens pour perforer le fond de la cartouche, lorsque celui-ci a atteint un certain degré de déformation par rapport à sa forme initiale, en permettant l'écoulement dudit produit liquide à travers ledit orifice.

La pièce perforatrice et injectrice de liquide pour la cartouche susmentionné ne contient pas de filtre intérieur devant résister à la pression du liquide.

Dans une forme de réalisation selon l'invention, le fond dudit logement de la pièce collectrice d'un appareil du type mentionné au début est formé par une paroi comportant au moins un orifice pour le passage du produit liquide et présentant une protubérance agencée de manière à provoquer la perforation de la paroi de fond de la cartouche, lorsque celle-ci a atteint un certain degré de déformation par rapport à sa forme initiale, cette protubérance présentant au moins un canal d'écoulement de liquide en communication avec ledit orifice.

La présente cartouche est en particulier destinée à être utilisée pour préparer une boisson chaude ou froide, telle que du café, ou du chocolat, ou un aliment liquide, tel qu'une soupe, au moyen d'un appareil de type usuel, tel qu'une machine à café, comprenant un dispositif permettant d'injecter un liquide tel que de l'eau chaude ou du lait chaud ou encore de la vapeur sous pression notamment dans une substance pulvérulente, notamment des grains de café torréfiés moulus, afin d'extraire les substances solubles contenues dans la substance pulvérulente.

On va maintenant donner une description détaillée, à titre d'exemple non limitatif, de formes d'exécution particulières de l'invention, notamment de la cartouche selon l'invention ainsi que de la pièce collectrice de produit liquide pour cette cartouche, en se référant au dessin annexé dans lequel :
La figure 1 représente, en coupe axiale, une forme d'exécution d'une pièce perforatrice et injectrice de liquide;
La figure 2 représente, en coupe axiale, une forme d'exécution de la cartouche;
La figure 3 représente la cartouche de la figure 2 placée dans une pièce collectrice de produit liquide et coiffée de la pièce perforatrice et injectrice de liquide selon la figure 1 lors de l'utilisation de la cartouche;
La figure 4 représente une forme d'exécution particulière de la pièce collectrice de produit liquide;
La figure 5 est une vue à échelle agrandie de la partie de la pièce collectrice de produit liquide indiquée par un cercle à la figure 4;
La figure 6 représente une autre forme d'exécution de la pièce collectrice de produit liquide;
La figure 7 est une vue à plus grande échelle de la partie de la pièce collectrice selon la figure 6 indiquée par un cercle à cette figure;
La figure 8 représente une autre forme d'exécution de la pièce collectrice de produit liquide;
La figure 8a est une vue en coupe selon la ligne B-B de la partie de la pièce collectrice indiquée par un cercle à la figure 8;
La figure 9 est une vue en coupe du fond d'une cartouche selon l'invention après utilisation de cette cartouche au moyen de la pièce collectrice des figures 8 et 8a;
La figure 10 est une vue en coupe, similaire aux figures 5 et 7, montrant une autre forme d'exécution d'une pointe perforatrice faisant partie de la pièce collectrice de produit liquide;
La figure 11 est une vue schématique en coupe illustrant un mode de fabrication d'une pointe perforatrice constituant une variante de la forme d'exécution de cette pointe représentée à la figure 10;
Les figures 12 (a) et 12 (b) représentent, en coupe axiale, une autre forme d'exécution de la cartouche;
La figure 13 est une vue en coupe axiale d'une autre forme d'exécution de la pièce collectrice de produit liquide.
La Fig. 14 est une vue en plan schématique, de dessus, correspondant à encore une autre forme d'exécution de la pièce collectrice de produit liquide;
La Fig. 15 est une vue schématique, en coupe verticale, de la pièce collectrice représentée à la Fig. 14, selon les plans indiqués par les lignes A-A et B-B sur cette dernière figure;
La Fig. 16 est une vue en plan d'une paroi filtre, munie d'organes perforateurs, destinée à être montée dans la pièce collectrice représentée aux figures 14 et 15; et
La Fig. 17 est une vue partielle en coupe verticale, à échelle agrandie, de la paroi filtre représentée à la Fig. 16, selon le plan indiqué par la ligne XVII-XVII sur cette dernière figure.

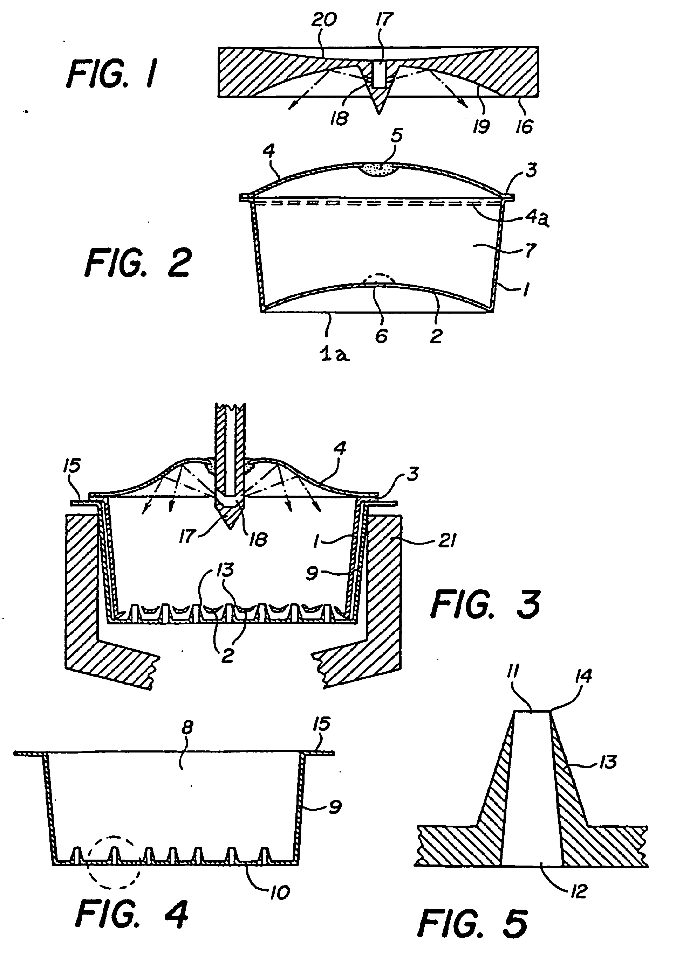

La cartouche représentée à la figure 2 est constituée d'une enveloppe étanche comprenant une paroi latérale 1 fermée à sa base par une paroi 2 faisant partie intégrante de l'enveloppe. Avantageusement, cette enveloppe est constituée en tôle d'aluminium ayant une épaisseur de 30 à 110 micro mètres, une épaisseur de 50 micro mètres convenant particulièrement bien. La forme générale de la cartouche est tronconique avec une conicité, par rapport à l'axe de la cartouche, de 1 à 10°, de préférence de l'ordre de 3°, cet angle convenant particulièrement bien en vue de faciliter l'introduction et la sortie de la cartouche dans la pièce collectrice de produit liquide.

L'enveloppe extérieure de la cartouche peut également être avantageusement en matière plastique. En particulier, l'enveloppe extérieure de la cartouche peut être constituée par un godet réalisé par thermoformage à partir d'une feuille de résine synthétique.

La paroi inférieure 2 de la cartouche a de préférence une forme de voûte concave dont la partie centrale se trouve à une distance de l'ordre de 1 à 20 mm par rapport à la base géométrique de la cartouche, de préférence à une distance de 8 à 10 mm. La forme de cette voûte peut être, notamment, arrondie, ou encore tronconique.

La paroi 2, constituant le fond de la cartouche, pourrait également être plate sur toute sa superficie en étant située dans un plan parallèle au plan dans lequel se trouve le bord inférieur circulaire 1 a de la paroi latérale 1 de la cartouche, le premier de ces deux plans étant placé en retrait, par rapport au second, à l'intérieur du volume global occupé par la cartouche, la distance entre ces deux plans étant, également, de l'ordre de 1 à 20 mm et, de préférence, de 8 à 10 mm.

La paroi supérieure 4 de la cartouche telle que représentée à la Fig. 2 est réunie, dans sa partie périphérique, à la paroi latérale 1, de la cartouche en formant une bordure 3. La jonction entre la paroi supérieure 4 et la paroi latérale 1 de la cartouche peut être réalisée par tous moyens appropriés, notamment par thermosoudage ou par sertissage. La paroi supérieure 4 a avantageusement une forme bombée, dépassant, par rapport au plan du rebord 3 d'une distance de 1 à 20 mm, de préférence 7 mm. Cependant la paroi 4 pourrait également être plane ou avoir une forme tronconique. Conformément à une variante de la forme d'exécution représentée à la figure 2, la membrane 4 peut être agencée de manière à pouvoir être arrachée par pelage le long de la bordure 3 et la cartouche comprend une membrane poreuse 4a, elle-même fixée sur la bordure 3, cette membrane étant destinée à retenir la substance remplissant la cartouche lorsque la paroi supérieure 4 est arrachée. Avantageusement, la partie centrale 5 de la paroi supérieure 4 de la cartouche est munie d'un petit logement 5 qui est, par exemple, de forme générale cylindrique. Avantageusement, le fond du logement 5 est affaibli. De même, la paroi inférieure 2 peut également présenter à sa partie supérieure un petit logement 6 par exemple, de forme générale cylindrique. Conformément à une forme d'exécution préférée, le fond de ce logement 6 est également affaibli.

Conformément à une autre forme d'exécution de la cartouche (non représentée), la paroi supérieure 4 de la cartouche est plate, mais comporte une pluralité de parties d'affaiblissement allongées, constituées chacune par une rainure en creux dont le fond a une épaisseur moindre que le reste de la paroi, destinées à permettre la déchirure de la paroi 4, le long de ces lignes, lorsque l'on applique, sur la paroi supérieure 4, une pression uniforme, au moment où l'on fournit de l'eau chaude ou de la vapeur sous pression provenant d'une machine à café. Avantageusement, ces parties d'affaiblissement allongées peuvent être disposées radialement en partant du centre de la paroi 4.

L'intérieur 7 de la cartouche est rempli d'une ou plusieurs substance(s) pulvérulente(s), ou encore d'au moins une substance liquide ou pâteuse, ou d'un mélange d'au moins une substance pulvérulente et d'au moins une substance liquide ou pâteuse. Par exemple, comme substance pulvérulente, il peut s'agir de café torréfié moulu, de feuilles de thé torréfiées, de tisane, de produit chocolaté. La substance pulvérulente peut être également constituée par les ingrédients d'une soupe ou d'un potage ou encore par ceux d'une sauce liquide ou soluble.

Comme représenté à la figure 3, la cartouche est placée, lors de son utilisation, à l'intérieur d'une pièce collectrice de produit liquide, qui constitue un dispositif d'extraction d'un appareil pour la préparation de boisson de type usuel, telle qu'une machine à café dite expresso. La pièce collectrice de liquide représentée à la figure 4 est composée d'un godet tronconique 9, dont la conicité correspond à un angle de 1 à 10°, de préférence 3°, qui est fermé à sa partie inférieure par une paroi 10. La paroi 10 présente des orifices correspondant avantageusement à une surface de passage de 2 à 20 % par rapport à la surface totale de la paroi 10. Ces orifices, dont l'un est représenté à la figure 5, à échelle agrandie, peuvent avantageusement avoir un diamètre d'entrée 11 de 400 micromètres et un diamètre de sortie 12 de 500 micromètres. Conformément à une forme d'exécution préférée, l'orifice présente une protubérance 13 tronconique qui fait saillie à partir de la surface de la paroi intérieure de la pièce collectrice sur une hauteur de l'ordre de 500 micromètres à 5 mm, de préférence 1 mm. Le bord supérieur 14 de l'orifice 13 est tranchant, afin de pouvoir percer ou déchirer la paroi inférieure 2 de la cartouche. Avantageusement, la pièce collectrice de liquide présente, à sa partie supérieure, une bordure 15 destinée à s'adapter à la partie périphérique inférieure 16 de la pièce perforatrice et injectrice de liquide représentée à la figure 1. Avantageusement, on peut utiliser un joint d'étanchéité (non représenté) par exemple en caoutchouc, pour l'adaptation de la bordure 15 contre la pièce perforatrice et injectrice de liquide lorsque la pièce collectrice de liquide et la pièce perforatrice et injectrice de liquide sont montées dans l'appareil servant à la préparation du produit liquide.

Comme on le voit à la figure 1, la pièce perforatrice et injectrice de liquide présente, à sa partie centrale, une pointe 17 comprenant un canal d'introduction de liquide communiquant avec une pluralité de buses de projection de liquide 18 dont les axes forment avantageusement un angle obtus avec l'axe de la pointe 17. Le nombre des buses de projection de liquide peut être quelconque, mais de préférence au moins de 3, et leur diamètre peut par exemple varier entre 100 micromètres et 900 micromètres, avec une valeur préférentielle de 500 micromètres.

La partie inférieure de la pièce perforatrice et injectrice de liquide forme une voûte concave 19 qui est de préférence conformée de façon à correspondre à la forme bombée de la paroi supérieure 4 de la cartouche. La pièce perforatrice et injectrice de liquide représentée à la figure 1 est destinée à être adaptée, par tous moyens appropriés, par exemple par vissage, sur le dispositif d'injection de liquide faisant partie de l'appareil dans lequel on utilise la cartouche, par exemple une machine à café espresso de type usuel et présente, à cet effet, une partie supérieure 20 appropriée.

Dans la position d'utilisation représentée à la figure 3, la cartouche est placée dans le logement 8 de la pièce collectrice 9 de produit liquide qui est elle-même placée dans un logement 21 faisant partie d'un organe de fixation, par exemple tel qu'une "poignée" ou "cuillère", fixé sur l'appareil de production d'eau chaude ou de vapeur par tout moyen approprié, par exemple, par un dispositif de fixation à baïonnette.

Lors de la mise en place de l'organe de fixation portant la pièce collectrice 9 de produit liquide, dans laquelle est placée la cartouche, dans l'appareil d'utilisation, le sommet de la cartouche est perforé par la pièce perforatrice et injectrice et le liquide permettant la préparation du produit liquide est injecté sous pression par les orifices 18, dans la cartouche, en formant des jets qui frappent la surface de la paroi intérieure de la partie supérieure 4 de la cartouche, ce qui a pour effet d'assurer une répartition régulière du liquide dans toute la surface supérieure de la substance pulvérulente placée dans la cartouche. Avantageusement, cette injection de liquide est effectuée sous pression relativement élevée pouvant atteindre et même dépasser une valeur de 15 bars.

Cette pression élevée a d'abord pour effet de déformer la membrane inférieure 2 de la cartouche puis, après un certain temps qui est fonction de la résistance de cette membrane et du débit du liquide, de presser cette membrane contre les pointes 13 du fond de la pièce collectrice 9 de produit liquide ce qui a pour effet que les pointes 13 percent ou déchirent la membrane 2 de la cartouche en provoquant l'écoulement régulier du produit liquide à-travers les trous pratiqués dans chacune de ces pointes. Ainsi, le produit liquide s'écoule directement dans le logement 21 de l'organe de fixation qui forme une petite chambre collectrice de liquide (non représentée) qui amène le produit liquide dans un récipient tel qu'une tasse ou un gobelet.

Après préparation et écoulement du produit liquide, on desserre l'organe de fixation comportant le logement récepteur 21 et on le détache de l'appareil utilisé pour la préparation du produit liquide, telle que la machine à café espresso, en entraînant la pièce collectrice 9 de produit liquide et la cartouche. Ensuite, on effectue un mouvement de renversement brusque qui permet de détacher la cartouche de la pièce collectrice 9 en entraînant la cartouche et son contenu. Conformément à une forme d'exécution particulièrement avantageuse, la paroi inférieure 2 de la cartouche est réalisée en un matériau suffisamment élastique pour assurer le nettoyage des pointes 13 en évitant ainsi l'accrochage sur ces pointes de particules de substance pulvérulente provenant de l'intérieur de la cartouche.

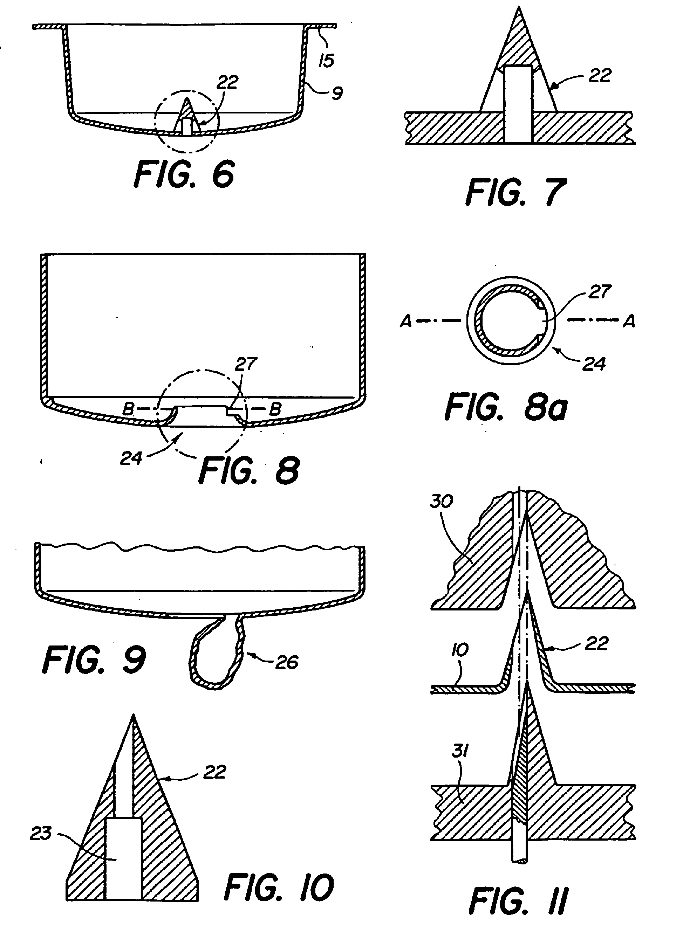

Dans le cas ou la substance contenue à l'intérieur de la cartouche est une substance liquide ou soluble, par exemple une substance soluble permettant la préparation de potage ou de café soluble, ou encore d'une sauce liquide ou soluble, on utilise de préférence une pièce collectrice 9 de produit liquide correspondant à la forme d'exécution illustrée à la figure 6. Conformément à cette forme d'exécution, la paroi inférieure de la pièce collectrice de produit liquide présente une seule pointe centrale 22 agencée de la manière représentée à la figure 7.

Comme on le voit à la figure 7, la pointe centrale 22 fait saillie à partir du fond de la pièce collectrice dont la paroi inférieure forme une chambre collectrice de forme incurvée ayant une profondeur de l'ordre de 2 à 15 mm, de préférence 6 mm. Comme on le voit à la figure 7, la pointe 22 est percée à sa base d'un orifice d'écoulement pour le produit liquide.

La forme d'exécution de la pièce collectrice de produit liquide représentée à la figure 8 est analogue à celle des figures 6 et 7 mais elle présente, au lieu de la pointe centrale 22, une protubérance de forme incurvée, présentant une arête supérieure tranchante 27, percée en son milieu par un orifice 24 traversant la paroi du fond de la pièce collectrice. Avantageusement, cette protubérance a une hauteur de 0,5 à 3 mm, et plus particulièrement de l'ordre de 1 mm, afin de permettre le découpage de la membrane inférieure 26 de la cartouche par son arête supérieure tranchante. La forme de cette arête, vue en plan, peut être circulaire mais elle est de préférence en forme de C, comme représenté à la figure 8a, ou bien en forme de fer à cheval. Ainsi, lors de l'utilisation de la cartouche, la paroi 26 de la membrane inférieure de celle-ci ne se détache pas complètement du reste de cette membrane mais reste accrochée à celle-ci comme représenté à la figure 9. Ainsi , le morceau de membrane découpé ne risque pas d'être entraîné lors de l'écoulement des produits liquides.

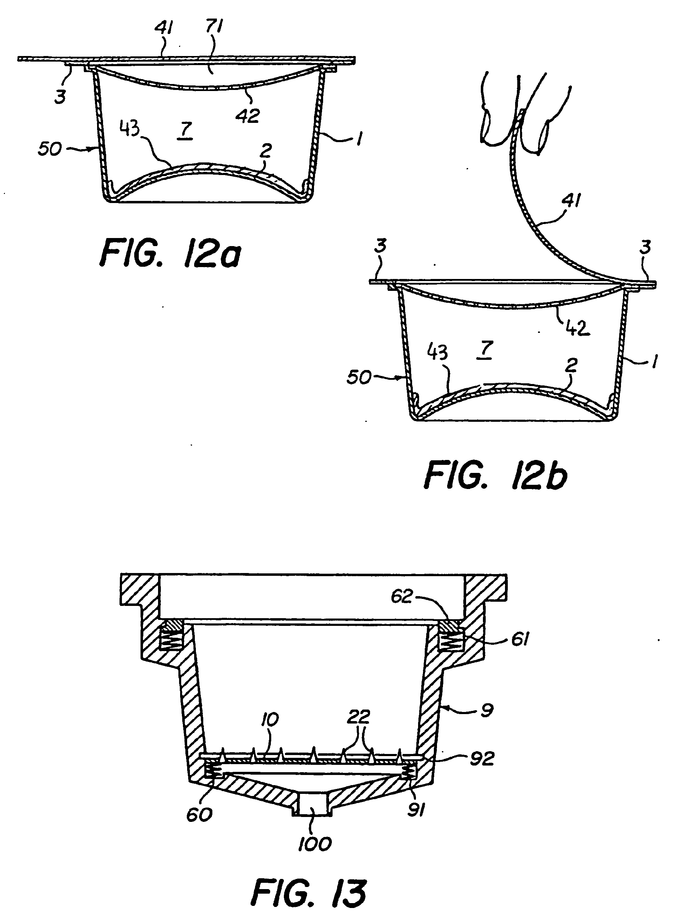

La pointe perforatrice 22 représentée à la figure 10 est percée d'un canal traversant 23 pour l'écoulement du produit liquide. L'axe du canal 23 est décentré rar rapport à l'axe de la pointe 22. Ceci permet de diminuer le risque d'obturation du canal 23 par une ou plusieurs particules solides, telles qu'un grain de substance à extraire ou à dissoudre, ou encore un lambeau de matériau d'emballage, éventuellement entraînées avec le produit liquide. Le canal 23 présente deux alésages concentriques successifs de diamètres différents, ce qui facilite l'entraînement de particules solides, ayant malencontreusement pénétré dans l'alésage le plus étroit, ainsi que le lavage du canal, par exemple par un courant d'eau chaude. Dans le même but, le canal 23 pourrait avoir une section longitudinale conique, comme dans le cas de la forme d'exécution de la pointe 22 représentée à la figure 11.

Pour la réalisation d'une pointe perforatrice telle que représentée à la figure 10, on peut procéder, par exemple, en perçant le canal 23 avec son axe décentré par rapport à celui de la pointe 22 ou encore en tronquant, par fraisage, par exemple avec un angle de fraisage de 30°, une pointe 22 présentant initalement un canal 23 centré.

La pointe perforatrice 22 représentée à la figure 11 est obtenue par étampage d'une plaque, par exemple en acier inoxydable, destinée à constituer la paroi filtre 10 du godet 9 de la pièce collectrice de liquide (telle que représentée, par exemple, à la figure 4). Cet étampage est effectué en utilisant une matrice femelle 30 et une matrice mâle 31, ces deux matrices étant, de préférence, agencées de manière à permettre l'obtention simultanée de toutes les pointes 22 de la paroi filtre 10, constituant la pluralité de pointes identiques représentées, par exemple aux figures 3 et 4.

La cartouche 50 représentée aux figures 12 (a) et 12 (b) est similaire à celle qui est illustrée à la figure 2, mais sa partie supérieure est fermée par une membrane d'obturation plane 41, aussi étanche que la paroi latérale 1 et le fond 2 de la cartouche 50.

Une membrane intérieure 42, percée d'une pluralité de petits orifices (éventuellement légèrement obturés), laissant passer l'eau ou la vapeur, mais retenant les particules solides de la substance à extraire ou dissoudre contenue à l'intérieur 7 de la cartouche 50, est fixée, par exemple par thermosoudage de sa partie -périphérique, à la partie supérieure de la cartouche 50, en dessous de la membrane d'obturation 41.

Comme représenté aux figures 12 (a) et 12 (b), la membrane intérieure 42 a, avantageusement, une forme légèrement concave qui peut être, par exemple, réalisée par thermoformage d'une feuille initialement plane.

Ainsi, dans l'état initial de la cartouche, illustré à la figure 12 (a), un compartiment 71 est formé entre la membrane d'obturation 41 et la membrane intérieure 42. Ce compartiment 71 peut avantageusement servir à contenir une substance, à extraire ou dissoudre, distincte de celle qui est contenue dans le compartiment intérieur principal 7 de la cartouche 50, ces deux substances restant ainsi séparées l'une de l'autre et leurs produits d'extraction ou de dissolution n'étant mélangés qu'au moment de l'utilisation de la cartouche.

Avantageusement, la cartouche peut comporter une membrane intérieure filtrante 43 placée au fond de la cartouche, par exemple en recouvrant la paroi inférieure 2, comme représenté aux Figs 12(a) et 12(b), en étant fixée, par exemple par thermosoudage, sur la surface intérieure de la paroi latérale 1 ou de la paroi inférieure 2 de la cartouche.

Cette membrane filtrante 43 a pour fonction de retenir les particules de substance solide contenue dans la cartouche, afin d'empêcher le bouchage des canaux d'écoulement de liquide dans la ou les pointes perforatrices 13 ou 22 par les particules de cette substance ayant une finesse suffisante pour risquer de s'introduire dans ces canaux tout en étant trop grosses pour passer librement à travers ces derniers. La membrane filtrante 43 est, de préférence, suffisamment souple et résiliente pour ne pas être elle-même percée par les pointes 13 ou 22. Ainsi, grâce à la membrane filtrante 43, tout contact direct entre les particules solides, contenues dans la cartouche, et les pointes perforatrices 13 ou 22 est évité. Avantageusement, la membrane filtrante 43, de même que la membrane intérieure 42, placée au-dessus de la substance contenue dans la cartouche, sont constituées par des fibres assemblées sous forme d'une feuile de matériau "non-tissé", ces fibres consistant, par exemple, en un mélange de fibres de polymère synthétique et de fibres cellulosiques.

Comme on le voit à la figure 12 (b), la membrane d'obturation 41 peut être arrachée par l'utilisateur de la cartouche 50 juste avant l'introduction de celle-ci dans la pièce collectrice de produit liquide.

Le godet 9 collecteur de produit liquide, qui constitue la pièce collectrice de produit liquide, représentée à la figure 13, est muni d'une paroi filtre 10 garnie d'une pluralité de pointes perforatrices 22 percées, cette paroi filtre 10 étant posée sur un coussinet élastique 60 s'appuyant dans une rainure périphérique 91 ménagée sur le fond de la partie intérieure du godet collecteur 9 de produit liquide. La paroi filtre 10 est maintenue en place de manière amovible au moyen d'un joint d'étanchétié torique (joint "O-ring") (non représenté) logé dans une rainure périphérique 92 au fond du godet collecteur 9.

Ainsi, la paroi filtre 10 peut être facilement enlevée en vue de son nettoyage. D'autre part, le déplacement vertical de la paroi filtre 10, sous l'effet de la force élastique exercée par le coussinet 60, facilite l'extraction des cartouches usagées.

Le godet 9, représenté à la figure 13, est, en outre, muni, à la périphérie de sa partie supérieure, d'un anneau élastique 61 garni d'un joint annulaire 62, cet anneau 61 ayant pour fonction de permettre de plaquer la bordure 3 de la cartouche contre l'organe (dit "douche") distributeur de l'eau ou de la vapeur de la machine utilisée, telle qu'une machine à café du type dit "Espresso". Ainsi, on obtient une bonne étanchéité de la jonction entre cette "douche" et la cartouche et on peut rattraper le jeu existant entre les positions verticales des "douches" selon les diverses marques de machine.

Il est à remarquer que l'on pourrait utiliser, au lieu d'une paroi filtre 10, un couteau annulaire chassé dans l'orifice inférieur 100 du porte-cartouche 9.

Avantageusement, les pointes perforatrices 22 ont chacune la forme d'une pyramide, par exemple à base triangulaire. De bons résultats, en ce qui concerne la facilité et la reproductibilité du percement de la paroi inférieure 2 de la cartouche, ont été obtenus avec une valeur de l'angle au sommet des pointes perforatrices pyramidales 22 de l'ordre de 30°.

Le godet collecteur 9 ainsi que la paroi 10 et les pointes perforatrices 22 peuvent être avantageusement réalisées en une matière plastique dure et résistant à la chaleur, notamment en résine de polysulfone. Les pointes perforatrices 22 peuvent comporter un ou plusieurs canaux pour le passage du produit liquide, ce canal ou ces canaux débouchant, par exemple, dans le cas où les pointes perforatrices 22 sont pyramidales, au voisinage de la partie supérieure d'au moins l'une des faces latérales.

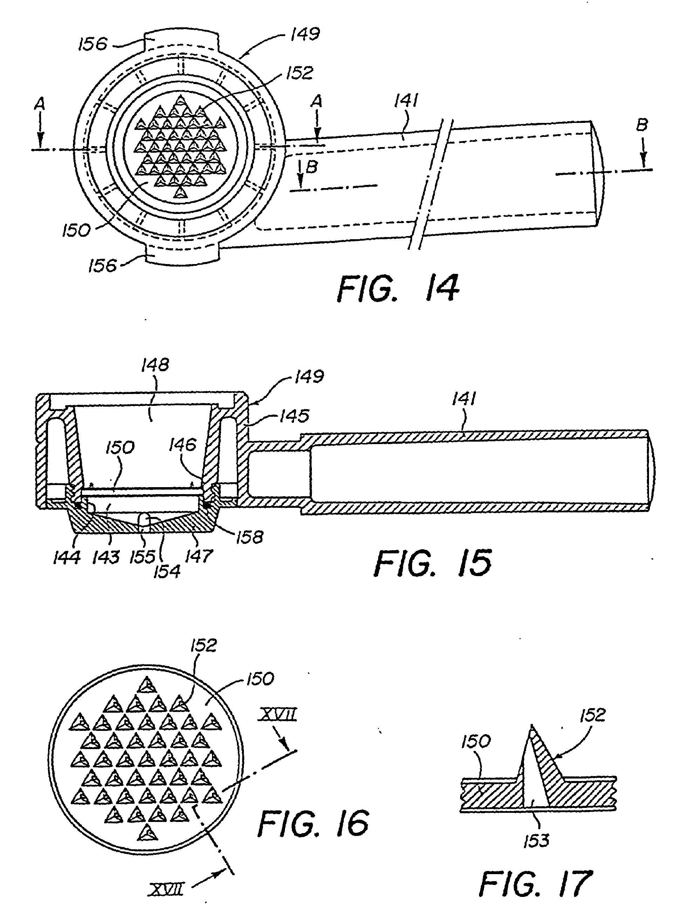

La pièce collectrice 149 de produit liquide, représentée aux figures 14 et 15, est réalisée sous forme d'une poignée destinée à être adaptée, par un dispositif de fixation à baïonnette, sur un appareil d'alimentation en eau bouillante ou vapeur tel que ceux qui font partie des machines à café "espresso" de type usuel.

Cette pièce collectrice 149 comprend un logement 148, agencé pour recevoir une cartouche selon l'invention (non représentée), un manche de poignée 141, constituant une pièce venue de moulage avec le corps creux 145, dont l'intérieur constitue le logement 148, un embout démontable 147 vissé à la partie inférieure du corps 145, et une paroi filtre 150 démontable qui est fixée dans la pièce collectrice 149 par pincement entre un rebord inférieur 146, situé à la partie inférieure de la paroi intérieure du logement 148, et la surface supérieure d'une paroi annulaire 144 délimitant un compartiment collecteur de liquide 143 à l'intérieur de l'embout 147.

La paroi filtre 150 est munie d'une pluralité d'organes perforateurs 152 en forme de pyramides à base triangulaire, percés chacun d'un trou d'écoulement de liquide 153, comme on le voit mieux à la Fig. 17.

L'étanchéité du raccordement entre la partie inférieure du corps 145 et l'embout 147 est obtenue au moyen d'un joint torique élastique 158.

L'écoulement du liquide hors du compartiment collecteur 143 s'effectue au moyen d'un canal horizontal allongé 154, ménagé dans le fond du compartiment 143, et de deux orifices d'écoulement 155 (dont un seul est visible à la Fig. 15) raccordés en positions symétriques à chacune des extrémités du canal 154.

L'étanchéité du raccordement entre la partie supérieure du corps 145 et l'embouchure d'amenée d'eau chaude ou de vapeur de l'appareil d'alimentation (non représenté) est réalisée au moyen d'un joint annulaire, non représenté, qui vient s'appuyer contre une surface circulaire, de diamètre correspondant à celui de ce joint, lorsque la pièce collectrice 149 est montée sur cette embouchure d'amenée d'eau chaude ou de vapeur, par fixation à baïonnette de manière connue en soi, au moyen de deux cames 156 disposées en positions diamétralement opposées en faisant saillie à partir de la partie supérieure du corps 145.

Le matériau constitutif de la paroi de la cartouche qui vient d'être décrite peut être utilisé en très petite quantité et consister en une matière biodégradable. On peut utiliser tout matériau approprié, choisi en fonction de la substance à protéger contenue dans la cartouche. Par exemple, on peut utiliser l'aluminium ou d'autres matériaux métalliques. On peut également utiliser des feuilles de matière plastique et, notamment, des matières plastiques présentant une certaine élasticité, et/ou facilement thermodéformables.

La cartouche selon l'invention peut être utilisée dans n'importe quel appareil de type connu pour la préparation de boisson de type usuel, les machines à café dites expresso, en utilisant un dispositif de fixation approprié pour l'adaptation de la pièce perforatrice et injectrice de liquide sur l'orifice d'un tel appareil délivrant le liquide ou la vapeur permettant la préparation du produit liquide.

La cartouche selon l'invention se distingue des cartouches de l'art antérieur, notamment par le fait qu'elle permet l'optimalisation de la préparation du produit liquide en particulier grâce au fait qu'elle permet un certain temps de pré-mouillage, d'aération, de dissolution des matières solubles, de captage des arômes volatils, pendant une durée optimale, avant que la paroi du fond de la cartouche ne soit percée pour permettre l'écoulement du produit liquide, tel qu'une boisson, un potage ou une sauce, préparée dans la cartouche.

## Revendications

1. Appareil et cartouche pour la préparation d'un produit liquide par introduction sous pression d'un liquide et/ou d'une vapeur dans la cartouche (50), celle-ci contenant une dose d'au moins une substance apte à former ledit, produit au moyen dudit liquide et/ou de la vapeur, l'appareil comprenant des moyens d'alimentation de la cartouche en liquide et/ou vapeur, ainsi que des moyens (9, 149) pour recueillir le produit liquide à l'extérieur de la cartouche, la cartouche comportant une enveloppe étanche formant une paroi latérale (1), ainsi que deux parois opposées, dont l'une (2) constitue la paroi de fond de la cartouche et l'autre (4, 41) ferme l'extrémité opposée de la cartouche, **caractérisé en ce que** au moins une partie de la paroi de fond de la cartouche est agencée de manière à pouvoir subir, sans se rompre, une déformation en s'éloignant, sous l'effet de l'introduction dudit liquide et/ou de ladite vapeur à l'intérieur de la cartouche, de l'extrémité de la cartouche opposée à la paroi de fond de celle-ci, et **en ce que** les moyens pour recueillir le produit liquide à l'extérieur de le cartouche comporte un porte-cartouche (9, 149) avec un logement (148) agencé pour recevoir la cartouche, le fond dudit logement étant formé par une paroi (10) comportant au moins un orifice pour le passage du produit liquide et présentant une protubérance (22) agencée de manière à provoquer la perforation de la paroi de fond (2) de la cartouche, lorsque celle-ci a atteint un certain degré de déformation par rapport à sa forme initiale, cette protubérance présentant au moins un canal d'écoulement (23) de liquide en communication avec ledit orifice.

2. Appareil et cartouche selon la revendication 1, **caractérisé en ce que** l'extrémité de ladite protubérance est terminée par une pointe ou une arête coupante (27).

3. Appareil et cartouche selon la revendication 2, **caractérisé en ce que** ladite arête coupante (27) a, vue en plan, une forme générale incurvée.

4. Appareil et cartouche selon la revendication 3, **caractérisé en ce que** l'arête coupante (27) a une forme en C ou en fer à cheval.

5. Appareil et cartouche selon la revendication 2 **caractérisé en ce que** ladite pointe comporte des orifices d'écoulement situés dans des parois latérales de ladite pointe.

6. Appareil et cartouche selon l'une des revendications précédentes, **caractérisé en ce que** le porte-cartouche (9) est muni, à sa partie supérieure, d'un joint annulaire (62) agencé pour plaquer, de façon élastique, une bordure périphérique (3) d'une cartouche (50) contre un organe distributeur d'eau ou de vapeur en forme de douche.

7. Appareil et cartouche selon l'une des revendications précédentes, **caractérisé en ce que** les moyens d'alimentation de la cartouche en liquide et/ou vapeur contiennent une pièce perforatrice et injectrice par laquelle s'effectue l'alimentation en liquide et/ou vapeur, cette pièce présentant une paroi (19) conformée pour pouvoir être mise en appui contre la paroi supérieure (4) de la cartouche et des moyens pour pratiquer au moins une ouverture dans cette dernière lors de cette mise en appui, en mettant ainsi l'intérieur de la cartouche en communication avec au moins un canal d'injection de liquide et/ou vapeur provenant dudit appareil ou dispositif d'alimentation.

8. Appareil et cartouche selon la revendication 7, **caractérisé en ce que** lesdits moyens de la pièce perforatrice et injectrice pour pratiquer ladite ouverture dans la paroi supérieure (4) de la cartouche sont constitués par au moins une protubérance (17) dont l'extrémité est munie d'au moins une pointe ou une arête coupante, cette ou ces protubérance(s) (17) faisant saillie à partir de la paroi (19) de la pièce perforatrice et injectrice, conformée pour venir en appui contre la paroi supérieure (4) de la cartouche et étant associée(s) avec au moins un canal d'injection de liquide et/ou vapeur traversant la pièce perforatrice et injectrice de façon à permettre l'injection dans la cartouche du liquide et/ou de la vapeur délivré(e) par ledit appareil ou dispositif d'alimentation.

9. Appareil et cartouche selon l'une des revendications précédentes, **caractérisée en ce que** la cartouche comporte une paroi de fond (2) ayant la forme d'une voûte concave.

10. Appareil et cartouche selon la revendication 9, **caractérisée en ce que** la partie opposée à la paroi de fond (2) de la cartouche a une forme bombée.

11. Appareil et cartouche selon la revendication 9 ou 10, **caractérisée en ce que** la paroi de fond (2) et la partie de la cartouche opposée à celle-ci ont des formes complémentaires, de manière à permettre l'emboîtage d'une pluralité de cartouches empilées les unes sur les autres.

12. Appareil et cartouche selon l'une des revendications 1 à 8, **caractérisée en ce que** la paroi de fond (2) de la cartouche et/ou la paroi (4) obturant la partie opposée à ladite paroi de fond présentent au moins une partie affaiblie.

13. Appareil et cartouche selon l'une des revendications 1à 8, **caractérisée en ce que** la cartouche comporte une cloison intérieure perméable au liquide, mais capable de retenir une substance pulvérulente contenue dans la cartouche.

14. Appareil et cartouche selon l'une des revendications 1 à 8, **caractérisée en ce que** la cartouche comporte une paroi supérieure (41) agencée de manière à permettre d'enlever au moins une partie de cette paroi avant l'utilisation de la cartouche.

15. Appareil et cartouche selon la revendication 14, **caractérisée en ce que** la cartouche comprend une membrane poreuse (42) agencée de manière à retenir la substance contenue dans la cartouche après enlèvement d'au moins une partie de la paroi supérieure de la cartouche.

16. Appareil et cartouche selon l'une des revendications 1 à 8, **caractérisée en ce que** la cartouche comporte une membrane intérieure filtrante (43) placée à proximité du fond de la cartouche.

## Claims

1. Apparatus and cartridge for the preparation of a liquid product by the introduction, under pressure, of a liquid and/or a vapour into the cartridge (50), where the latter contains a measure of at least one substance capable of forming the said product by means of the said liquid and or vapour; the apparatus comprising means for supplying the cartridge with liquid and/or vapour, as well as means (9, 149) for collecting the liquid product outside the cartridge, the cartridge comprising a sealed envelope forming a lateral wall (1), as well as two opposing walls, one of which (2) constitutes the bottom wall of the cartridge, and the other (4, 41) closes off the opposite end of the cartridge, **characterised in that** at least one part of the bottom wall of the cartridge is designed such that it is able to withstand a deformation without rupturing as it moves away, under the effect of introducing the said liquid or vapour into the cartridge, from the end of the cartridge opposite to the bottom wall of the latter, and **in that** the means for collecting the liquid product outside the cartridge include a cartridge-holder (9, 149) with a housing (148) arranged to accommodate the cartridge, the bottom of the said housing being formed by a wall (10) that includes at least one orifice for passage of the liquid product and having a protuberance (22) arranged so as to cause the perforation of the bottom wall (2) of the cartridge when the latter has reached a certain degree of deformation with respect to its initial shape, this protuberance having at least one liquid flow channel (23) in communication with the said orifice.

2. Apparatus and cartridge according to claim 1, **characterised in that** the extremity of the said protuberance terminates in a point or a sharp edge (27)

3. Apparatus and cartridge according to claim 2, **characterised in that** the said sharp edge (27) has a generally inwardly curved shape in plan view.

4. Apparatus and cartridge according to claim 3, **characterised in that** the sharp edge (27) is in the shape of a letter C or a horseshoe.

5. Apparatus and cartridge according to claim 2, **characterised in that** the said point comprises flow orifices located in the lateral walls of the said point.

6. Apparatus and cartridge according to one of the preceding claims, **characterised in that** the cartridge holder (9) is equipped, in its upper part, with an o-ring (62) that is designed to seal, in an elastic fashion, a peripheral edge (3) of the cartridge (50) against a water or vapour dispensing device in the form of a shower.

7. Apparatus and cartridge according to one of the preceding claims, **characterised in that** the means for supplying the cartridge with liquid and/or vapour contains a perforating and injecting part through which the feeding of liquid and/or vapour is effected, this part having one wall (19) shaped so that it can fit against the upper part (4) of the cartridge, and means for the creation of at least one opening in the latter when so fitted, thereby putting the interior of the cartridge in communication with at least one liquid and/or vapour injection channel coming from the said feeding apparatus or device.

8. Apparatus and cartridge according to claim 7, **characterised in that** the said means of the perforating and injecting part for creating the said opening in the upper wall (4) of the cartridge are composed of a least one protuberance (17) whose extremity is equipped with at least one point or sharp edge, the or these protuberance(s) (17) project from the wall (19) of the perforating and injecting part, are shaped so as to fit against the upper wall (4) of the cartridge, and are associated with at least one channel for the injection of liquid and/or vapour passing through the perforating and injecting part so as to allow the injection into the cartridge of the liquid and/or vapour supplied by the said feeding apparatus or device.

9. Apparatus and cartridge according to one of the preceding claims, **characterised in that** the cartridge includes a bottom wall (2) having a concave vaulted shape.

10. Apparatus and cartridge according to claim 9, **characterised in that** the part opposite to the bottom wall (2) of the cartridge has a domed shape.

11. Apparatus and cartridge according to claim 9 or 10, **characterised in that** the bottom wall (2) and the part of the cartridge opposite to the latter have complementary shapes, so as to allow the nesting of a plurality of cartridges stacked upon each other.

12. Apparatus and cartridge according to one of the claims 1 to 8, **characterised in that** the bottom wall (2) of the cartridge and/or the wall (4) closing off the part opposite to the said bottom wall have at least one weakened part.

13. Apparatus and cartridge according to one of the claims 1 to 8 **characterised in that** the cartridge includes an internal partition that is permeable to liquid but that is capable of retaining a powdery substance contained in the cartridge.

14. Apparatus and cartridge according to one of the claims 1 to 8, **characterised in that** the cartridge includes an upper wall (41) arranged so as to allow at least a part of this wall to be removed before use of the cartridge.

15. Apparatus and cartridge according to claim 14, **characterised in that** the cartridge comprises a porous membrane (42) arranged so as to retain a substance contained in the cartridge after the removal of at least a part of the upper wall of the cartridge.

16. Apparatus and cartridge according to one of the claims 1 to 8, **characterised in that** the cartridge includes an internal filter membrane (43) placed close to the bottom of the cartridge.

## Patentansprüche

1. Gerät und Kapsel für die Zubereitung eines flüssigen Erzeugnisses durch Einführung einer Flüssigkeit und/oder eines Dampfes unter Druck in die Kapsel (50), die eine Dosis zumindest einer Substanz enthält, die in der Lage ist, das Erzeugnis vermittels der Flüssigkeit und/oder des Dampfes zu bilden, wobei das Gerät Mittel zur Versorgung der Kapsel mit Flüssigkeit und/oder Dampf sowie Mittel (9, 149) umfasst, um das flüssige Erzeugnis ausserhalb der Kapsel aufzufangen, und die Kapsel eine dichte Hülle aufweist, die eine Seitenwand (1) sowie zwei gegenüberliegende Wandungen bildet, deren eine (2) den Kapselboden darstellt und deren andere (4, 41) das gegenüberliegende Ende der Kapsel verschliesst, **dadurch gekennzeichnet, dass** zumindest ein Teil des Kapselbodens so ausgelegt ist, dass er, ohne zu reissen, eine Verformung erleiden kann, indem er sich unter der Wirkung der Einführung der Flüssigkeit und/oder des Dampfes ins Innere der Kapsel von dem Ende der Kapsel wegbewegt, das dem Kapselboden gegenüber liegt; und **dadurch**, dass die Mittel zum Auffangen des flüssigen Erzeugnisses ausserhalb der Kapsel einen Kapselhalter (9, 149) mit einer Fassung (148) aufweisen, die dafür geeignet ist, die Kapsel aufzunehmen, wobei der Boden der Fassung aus einer Wand (10) gebildet wird, die zumindest eine Öffnung für den Durchgang des flüssigen Erzeugnisses aufweist und einen Vorsprung (22) aufweist, der so ausgelegt ist, dass er die Durchlöcherung des Kapselbodens (2) bewirkt, sobald dieser einen bestimmten Verformungsgrad bezüglich seiner ursprünglichen Gestalt erreicht hat, wobei dieser Vorsprung zumindest einen Auslaufkanal (23) für die Flüssigkeit in Verbindung mit der Öffnung aufweist.

2. Gerät und Kapsel nach Anspruch 1, **dadurch gekennzeichnet, dass** das Ende des Vorsprungs in eine Spitze oder Schneidkante (27) ausläuft.

3. Gerät und Kapsel nach Anspruch 2, **dadurch gekennzeichnet, dass** die Schneidkante (27) in Draufsicht gesehen eine allgemein einwärts gekrümmte Gestalt besitzt.

4. Gerät und Kapsel nach Anspruch 3, **dadurch gekennzeichnet, dass** die Schneidkante (27) die Gestalt eines C oder eines Hufeisens besitzt.

5. Gerät und Kapsel nach Anspruch 2, **dadurch gekennzeichnet, dass** die Spitze Auslauföffnungen umfasst, die sich in Seitenwänden der Spitze befinden.

6. Gerät und Kapsel nach einem der vorangehenden Ansprüche, **dadurch gekennzeichnet, dass** der Kapselträger (9) in seinem oberen Abschnitt mit einer ringförmigen Dichtung (62) versehen ist, die so ausgelegt ist, dass ein Aussenrand (3) einer Kapsel (50) elastisch gegen ein Wasser- oder Dampf-Verteilorgan in Gestalt einer Dusche gedrückt wird.

7. Gerät und Kapsel nach einem der vorangehenden Ansprüche, **dadurch gekennzeichnet, dass** die Mittel zur Versorgung der Kapsel mit Flüssigkeit und/oder Dampf ein bohrendes und injizierendes Teil enthalten, durch das die Versorgung mit Flüssigkeit und/oder Dampf erfolgt, wobei dieses Teil eine Wand (19), die so gestaltet ist, dass sie gegen den Kapseldeckel (4) gedrückt werden kann, sowie Mittel aufweist, um während dieses Andrückens zumindest eine Öffnung in diesen Deckel zu drücken, indem somit das Innere der Kapsel mit zumindest einem Einspritzkanal für Flüssigkeit und/oder Dampf, die von dem Versorgungsgerät bzw. der Versorgungsvorrichtung kommen, in Verbindung gebracht wird.

8. Gerät und Kapsel nach Anspruch 7, **dadurch gekennzeichnet, dass** die Mittel des bohrenden und injizierenden Teils zum Anbringen der Öffnung im Kapseldeckel (4) aus zumindest einem Vorsprung (17) bestehen, dessen Ende mit zumindest einer Spitze oder Schneidkante versehen ist, wobei dieser Vorsprung / diese Vorsprünge (17) von der Wandung (19) des bohrenden und injizierenden Teils hervorstehen, die so gestaltet ist, dass sie gegen den Kapseldeckel (4) gedrückt werden und so mit zumindest einem das bohrende und injizierende Teil querenden Einspritzkanal für Flüssigkeit und/oder Dampf verbunden werden, dass Flüssigkeit und/oder Dampf, die durch das Versorgungsgerät bzw. die Versorgungsvorrichtung geliefert werden, in die Kapsel eingespritzt werden können.

9. Gerät und Kapsel nach einem der vorangehenden Ansprüche, **dadurch gekennzeichnet, dass** die Kapsel einen Boden (2) aufweist, der die Gestalt einer konkaven Wölbung besitzt.

10. Gerät und Kapsel nach Anspruch 9, **dadurch gekennzeichnet, dass** der dem Boden (2) gegenüberliegende Abschnitt der Kapsel eine ausbauchende Form besitzt.

11. Gerät und Kapsel nach Anspruch 9 oder 10, **dadurch gekennzeichnet, dass** der Kapselboden (2) und der diesem gegenüber liegende Abschnitt der Kapsel eine komplementäre Gestalt besitzen, um das Ineinanderschachteln einer Mehrzahl von übereinander gestapelten Kapseln zu ermöglichen.

12. Gerät und Kapsel nach einem der Ansprüche 1 bis 8, **dadurch gekennzeichnet, dass** der Kapselboden (2) und/oder die Wand (4), die den diesem Boden gegenüberliegenden Abschnitt verschliesst, zumindest einen geschwächten Abschnitt aufweisen.

13. Gerät und Kapsel nach einem der Ansprüche 1 bis 8, **dadurch gekennzeichnet, dass** die Kapsel eine innere Trennwand aufweist, die für die Flüssigkeit durchlässig ist, aber in der Lage ist, eine in der Kapsel enthaltene pulverförmige Substanz zurückzuhalten.

14. Gerät und Kapsel nach einem der Ansprüche 1 bis 8, **dadurch gekennzeichnet, dass** die Kapsel einen Deckel (41) aufweist, der so ausgelegt ist, dass zumindest ein Abschnitt dieses Deckels vor Gebrauch der Kapsel abgenommen werden kann.

15. Gerät und Kapsel nach Anspruch 14, **dadurch gekennzeichnet, dass** die Kapsel eine poröse Membran (42) umfasst, die so ausgelegt ist, dass sie die in der Kapsel enthaltene Substanz zurückhält, nachdem zumindest ein Abschnitt des Kapseldeckels abgenommen worden ist.

16. Gerät und Kapsel nach einem der Ansprüche 1 bis 8, **dadurch gekennzeichnet, dass** die Kapsel eine filtrierende Innenmembran (43) aufweist, die in der Nähe des Kapselbodens angeordnet ist.
